# EUROPÄISCHE PATENTSCHRIFT

(11) **EP 0 928 915 B1**
(45) Veröffentlichungstag und Bekanntmachung des Hinweises auf die Patenterteilung: **10.08.2005**
(21) Anmeldenummer: 99100464.9
(22) Anmeldetag: 12.01.1999
(51) Int. Cl.: F16K 1/44

(54) **Doppeldichtventil mit Leckkontrolle**
Double-seat valve with leak control
Soupape à siège double pour contrôler des fuites

(43) Veröffentlichungstag der Anmeldung: 14.07.1999
(73) Patentinhaber: Wilhelm Guth GmbH & Co. KG, 76829 Landau (DE)
(72) Erfinder: Thomaschki, Stephan, 76829 Landau (DE)
(74) Vertreter: Patentanwälte Möll und Bitterich

(56) Entgegenhaltungen:
- DE-A- 3 516 128
- US-A- 5 085 241
- US-A- 5 775 363

## Beschreibung

Die Erfindung betrifft ein Doppeldichtventil mit Leckkontrolle nach dem Oberbegriff des Anspruchs 1.

Aus der DE 35 16 128 C ist ein Doppelsitzventil bekannt, welches einen zylinderförmigen, durchmessergleichen Ventilkörper mit zwei als Radialdichtungen ausgebildeten Dichtungen offenbart, die in waagerechten, axial beabstandeten Ebenen angeordnet sind. Als Leckagehohlraum zur Abführung von gegebenenfalls an den Dichtungen auftretenden Leckagen ist im Ventilgehäuse zwischen den Radialdichtungen eine Ringkammer mit minimalem Querschnitt vorgesehen, die über zwei mit steuerbaren Ventilen ausgerüstete Reinigungs- bzw. Leckageanschlüsse mit der Außenwelt in Verbindung steht. Aufgrund der Ventilkonstruktion fährt beim Bewegen des Schließelements eine der Dichtungen durch die Leckagekammer, wo sie die Dichtwirkung verliert. Daher ist eine Reinigung der Dichtungen nur bei geleertem Ventil möglich. Das ist unbefriedigend.

Die US 5,085,241 offenbart in 81 Abbildungen eine Unzahl von Varianten von Doppeldichtventilen. In jedem Fall Ist ein zylindrisches, durchmessergleiches erstes Schließelement und ein koaxial dazu angeordnetes durchmessergleiches zweites Schließelement vorgesehen. Eine Ausführung sieht vor, dass beide Schließelemente eine Dichtung mit U-förmigem Querschnitt und zylindrischer Außenkontur tragen. Solche großflächigen Dichtungen erzeugen jedoch große Reibkräfte. Nachteiliger ist, dass an diesen Dichtungen große Mengen Fluid anhaften, die zu Kontaminationen führen können.

Abgesehen von diesem eben erwähnten Ausführungsbeispiel offenbart die US 5,085,241 die Anordnung der Dichtungen im Ventilgehäuse. In einigen Fällen werden zwei getrennte Dichtungen verwendet; in der Mehrzahl der Ausführungsbeispiele wird jedoch nur eine einzige Dichtung verwendet, die so profiliert ist, dass zum Schließelement hin zwei Abdichtungsstellen entstehen. Auch diese Dichtungen sind großflächig, wodurch größere Mengen Fluid anhaften und zu Kontaminationen führen.

Der größte Nachteil der einstückigen Dichtung ist jedoch, dass bei einer Beschädigung der Hauptdurchgang undicht wird, so dass die Fluide, die das Ventil trennen soll, sich vermischen.

Derartige einstückige Dichtungen erfüllen die Sicherheitsforderungen der Getränke- und Chemieindustrie nicht.

Im Gegensatz zu den vorerwähnten Doppelsitzventilen verfügt beispielsweise das aus der Firmendruckschrift "DSV Kleinstventil D 200" der SÜDMO Schleicher AG, Ausgabe 11/95, DSKV D 200 bekannte Doppelsitzventil auf einem einstückigen Schließglied über zwei axial beabstandete, radial wirkende Dichtungen, die jeweils mit ventilgehäuseseitig korrespondierenden, die Verbindungsöffnung berandenden zylindrischen Sitzflächen unterschiedlichen Durchmessers abdichten. Der Bereich zwischen den beiden Dichtungen ist auf dem Weg durch das Schließglied und ein mit diesem verbundenes Rohr, das auf der einem Antrieb gegenüberliegenden Seite des Doppelsitzventils aus dem Ventilgehäuse herausgeführt ist, mit der Umgebung verbunden. Um in anderen Stellungen als in der Schließstellung des Doppelsitzventils einen Produktverlust über den vorstehend beschriebenen Verbindungsweg zu verhindern, ist innerhalb des Schließgliedes und einer dieses über einen Hubantrieb betätigenden Ventilstange ein sogenannter automatischer mechanischer Leckageverschluss vorgesehen. Bei letzterem handele es sich um ein in Abhängigkeit von der Stellung des Schließglieds zwangsweise gesteuertes weiteres Schließglied, das den Verbindungsweg innerhalb des Schließgliedes verschließt. Dieses Doppelsitzventil ist aufgrund seines schließgliedseitigen Leckageauslaufs und des dadurch erforderlichen zweiten Schließglieds in seinem Aufbau relativ komplex. Darüber hinaus besitzt es zwischen den beiden axial beabstandeten Dichtungen keinen raumgreifend ausgeprägten Leckagehohlraum, so dass bei Defekten an den Dichtungen eine drucklose Abführung der dann entstehenden Leckage nicht sichergestellt ist.

Die Verwendung von zwei getrennten, unabhängig zu steuernden Schließelementen, wie sie die beiden zuvor beschriebenen Ventile benötigen, hat die Verwendung zweier getrennt zu steuernder Antriebe zur Folge. Ebenso werden zusätzliche Dichtungen benötigt, die die zusätzlichen Schließelemente abdichten. Die Montage ist aufwändig, die Ventile sind anfällig.

Ein wesentlicher Nachteil der in der Firmendruckschrift der SÜDMO Schleicher AG und in der DE 35 16 128 C beschriebenen Ventile ist, dass die Ventilsitze nicht gereinigt werden können. Eine Reinigung der einen Sitzfläche unabhängig von der anderen ist vielfach erwünscht, insbesondere dann, wenn in einem der beiden Gehäuseteile Produkt ansteht, in dem anderen Gehäuseteil dagegen Reinigungsmittel, wodurch ein Öffnen des Ventils und eine Reinigung der Verbindungsöffnung mit den dort angeordneten Sitzflächen im Durchfluss nicht möglich ist.

Der vorliegenden Erfindung liegt die Aufgabe zugrunde, ein Doppeldichtventil der gattungsgemäßen Art in seinem Aufbau zu vereinfachen, die sichere Abfuhr von an den Dichtungen gegebenenfalls auftretenden Leckagen in die Umgebung zu ermöglichen und vor allem eine Reinigung der Sitzflächen, jeweils getrennt voneinander, bei geschlossenem Hauptdurchgang zwischen den beiden Gehäuseteilen sicherzustellen.

Diese Aufgabe wird gelöst durch ein Doppeldichtventil mit den Merkmalen des Anspruchs 1.

Vorteilhafte Ausgestaltungen sind Gegenstand der Unteransprüche.

Beim erfindungsgemäßen Ventil sind die Dichtungen auf dem Schließelement befestigt, wo sie aufgrund ihrer elastischen Eigenschaften sozusagen von selbst sitzen. Des weiteren werden zwei getrennte Dichtungen verwendet, so dass die Sicherheitsforderungen der Getränke- und Chemieindustrie erfüllt werden. Der Leckagehohlraum befindet sich im Schließelement zwischen den beiden Dichtungen, so dass beim Verfahren des Schließelements keine Undichtigkeiten auftreten können. Endlich können die Dichtungen als elastische Ringe mit kleiner Oberfläche ausgeführt werden, an der nur wenig Fluid anhaftet, so dass die Gefahr von Verunreinigungen minimiert ist.

Die Ausformung des Leckagehohlraums in Form einer den Sitzbereich zwischen den Abdichtungsstellen umfassenden Ausnehmung schafft die Voraussetzung, die Leckagen mit hinreichender Sicherheit drucklos abführen zu können. Der Durchtrittsquerschnitt der Ausnehmung kann in Grenzen sehr einfach verändert und den Sicherheitsanforderungen angepasst werden. Des weiteren ergibt sich bei der vorgeschlagenen Anordnung sehr einfach die Möglichkeit, in dem Bereich zwischen den Abdichtungsstellen, der vom Leckagehohlraum nicht erfasst wird, und zwar zwischen Schließglied und zugeordneter zylindrischer Sitzfläche, sogenannte Drosselspalte vorzusehen, die die jeweilige Leckagemenge begrenzen.

Des weiteren lässt sich das Schließglied in eine erste Spülstellung, in der ein Spülweg von dem zweiten Gehäuseteil über den Leckagehohlraum in den Verbindungsweg gebildet wird, oder in eine zweite Spülstellung, in der ein Spülweg vom ersten Gehäuseteil über den Leckagehohlraum in den Verbindungsweg gebildet wird, verschieben, wobei in beiden Spülstellungen der Durchtritt über die Verbindungsöffnung von dem einen zum anderen Gehäuseteil durch das Schließglied selbst geschlossen bleibt. Damit ist das erfindungsgemäße Ventil, bezogen auf die erste oder die zweite Sitzfläche, sitzreinigungsfähig.

Zu diesem Zweck ist das Doppeldichtventil mit einem Antrieb ausgestattet, der die Eigenschaft besitzt, neben der Schließstellung und der Offenstellung für das Schließglied letzteres auch um einen Teilhub in der einen oder anderen Richtung zu verschieben. In der ersten Spülstellung wird die dem zweiten Gehäuseteil benachbarte Sitzdichtung freigelegt. In der zweiten Spülstellung wird die andere Sitzdichtung freigelegt.

Um das erfindungsgemäße Doppeldichtventil bei in den Gehäuseteilen gegebenenfalls auftretenden Druckschlägen gegen Aufdrücken zu sichern oder um die Öffnungs- und Schließkräfte des Doppeldichtventils infolge der Mediumsdrücke zu reduzieren, wird weiterhin vorgeschlagen, die das Schließglied mit seinem Antrieb verbindende Stange im Bereich ihrer Durchführung durch das erste Gehäuseteil mit einem Durchmesser auszustatten, der gleich oder annähernd gleich dem Durchmesser der Sitzflächen ausgeführt ist (sogenannter Balancer).

Das gleiche Prinzip kann auch auf eine Führungsstange übertragen werden, die mit dem Schließglied verbunden ist und die auf der dem Antrieb gegenüberliegenden Seite durch das zweite Gehäuseteil hindurchgeführt ist.

Diese sogenannte Balancer-Anordnung ist dann angezeigt, wenn das Schließglied insgesamt als durchmessergleicher Schieberkolben ausgeführt ist und die Verschiebebewegungen des Schließgliedes als Folge der auftretenden Druckschläge oder Mediumsdrücke nicht durch planmäßig vorhandene mechanische Hubbegrenzungen verhindert werden können.
Obwohl die Leckkontrolle des Doppeldichtventils und die Sitzreinigung der Ventilsitze ohne Einschränkung bereits mit einem einzigen Verbindungsweg zwischen dem Leckagehohlraum und der Umgebung des Doppeldichtventils realisierbar sind, wird gemäß einer Weiterbildung der Erfindung vorgeschlagen, den Leckagehohlraum über einen zweiten Verbindungsweg mit der Umgebung des Doppeldichtventils zu verbinden. Damit lassen sich der Leckagehohlraum und die angrenzenden Verbindungswege auch bei geschlossenem Ventil im Durchfluss reinigen.

Es versteht sich, dass die Verbindungswege zwischen dem Leckagehohlraum und der Umgebung des Doppeldichtventils in Abhängigkeit von der jeweiligen Stellung des Doppeldichtventils und in Abhängigkeit von der jeweils zu treffenden Maßnahme - Leckkontrolle, Sitzreinigung, Leckagehohlraumspülung - zwangsweise zu steuern und zu schalten sind. Hierzu sind an sich bekannte Absperreinrichtungen vorzusehen, die vorzugsweise fernsteuerbar sind oder deren Schließglieder im einfachsten Fall mechanisch zwangsweise in Abhängigkeit von der jeweiligen Schließstellung des Doppeldichtventils betätigbar auszuführen sind.

Das vorgeschlagene Doppeldichtventil eignet sich für den Einsatz in Bereichen, in denen unter aseptischen Bedingungen gearbeitet werden muss, wenn im Bereich der Durchführung der Antriebsstange und/oder der Führungsstange durch das jeweils zugeordnete Gehäuseteil ein die jeweilige Durchführung überbrückender Balg, der als Faltenbalg oder Wellrohr ausgebildet sein kann, vorgesehen ist.

Für den Fall, dass die Durchführung der Antriebsstange und/oder der Führungsstange durch das jeweils zugeordnete Gehäuseteil in der herkömmlichen Weise ausgeführt ist, nämlich mittels einer die Stangen gegenüber dem Gehäuse abdichtenden Gehäusedichtung, wird die jeweilige Durchführung zur Sicherstellung ihrer einwandfreien Reinigung mit einem sogenannten Spülschloss versehen. Ein Spülschloss ist ein im jeweiligen Gehäuseteil angeordneter, mit einem Zu- oder Ablauf versehener Ringraum mit axialer Erstreckung, der die Stangen umschließt. Auf diese Weise können Verunreinigungen, die durch die Schaltbewegungen des Ventils in den Bereich der Stangendurchführung hineingetragen werden, einwandfrei beseitigt werden, so dass eine Rekontamination des Produkts ausgeschlossen werden kann. Eine derartige Ausgestaltung des Doppeldichtventils ist insbesondere dann zweckmäßig, wenn die jeweilige Stangendurchführung in Form eines Druckausgleichkolbens mit relativ großem Durchmesser ausgeführt ist. Stangendurchführungen mit großem Durchmesser sind bekanntlich relativ schwierig abzudichten und demzufolge reinigungstechnisch problematisch.

Ausführungsbeispiele des erfindungsgemäßen Doppeldichtventils sind in der Zeichnung dargestellt und werden nachfolgend hinsichtlich Aufbau und Wirkungsweise beschrieben. Es zeigen
- Fig. 1: einen Mittelschnitt durch eine erste bevorzugte Ausführungsform eines Doppeldichtventils, wobei das Schließglied sich in seiner Offenstellung befindet,
- Fig. 2: ebenfalls im Mittelschnitt das Doppeldichtventil der Fig. 1, wobei sich das Schließglied in der Schließstellung befindet,
- Fig. 3: einen Mittelschnitt durch das Doppeldichtventil der Figuren 1 und 2, wobei die Darstellung sich auf den Sitzbereich beschränkt und das Schließglied sich in seiner ersten Spülstellung befindet, und
- Fig. 4: das Doppeldichtventil gemäß Fig. 3, wobei sich das Schließglied in seiner zweiten Spülstellung befindet

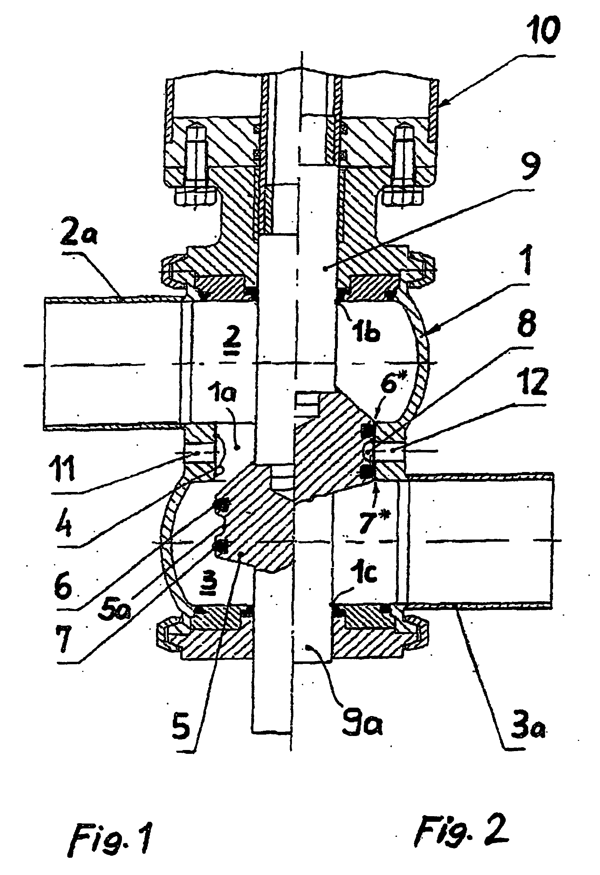

Das Doppeldichtventil (Fig. 1 und 2) besteht im wesentlichen aus einem Ventilgehäuse 1, das sich aus einem ersten Gehäuseteil 2 mit einem ersten Anschlussstutzen 2a und einem zweiten Gehäuseteil 3 mit einem zweiten Anschlussstutzen 3a zusammensetzt. Die Gehäuseteile 2 und 3 sind über eine durchgehende durchmessergleiche Verbindungsöffnung 1a, die von einer zylindrischen Mantelfläche, einer zylindrischen Sitzfläche 4, berandet wird, miteinander verbunden. An dem ersten Gehäuseteil 2 ist ein nur teilweise dargestellter Antrieb 10, in der Regel ein druckmittelbeaufschlagter Hubantrieb, vorgesehen, der über eine Stange 9 ein mit dieser verbundenes Schließglied 5 translatorisch verschiebt. Mit dem Schließglied 5 wird die Verbindungsöffnung 1a gesteuert, wobei es, in seiner Verschieberichtung gesehen, umfangsseitig mit der ventilgehäuseseitig korrespondierenden, die Verbindungsöffnung 1a berandenden zylindrischen Sitzfläche 4 zwei axial beabstandete Abdichtungsstellen 6*, 7* (Fig. 2) bildet.

Im dargestellten Ausführungsbeispiel werden die Abdichtungsstellen 6*, 7* durch schließgliedseitige Dichtungen 6 und 7 in Verbindung mit der zylindrischen Sitzfläche 4 gebildet. Die Dichtungen 6 und 7 sind in radialer Richtung wirksam. Zwischen beiden ist im Schließglied 5 eine Ausnehmung 5a vorgesehen, die als umlaufender, in sich geschlossener Ringraum ausgebildet ist und die einen Leckagehohlraum 8 ausbildet. Verbindungswege 11 und 12, vorzugsweise ausgebildet als Bohrungen, stellen ventilgehäuseseitig eine Verbindung her zwischen der Verbindungsöffnung 1a und der Umgebung des Doppeldichtventils, wobei die Verbindungswege 11 und 12 derart in die Verbindungsöffnung 1a ausmünden, dass ihre Austrittsöffnungen in der Schließstellung des Doppeldichtventils mit dem durch die Ausnehmung 5a im Schließglied 5 gebildeten Leckagehohlraum 8 korrespondieren.

Das Schließglied 5 verlängert sich auf der dem Antrieb 10 abgewandten Seite des Ventilgehäuses 1 in eine Führungsstange 9a, die durch das zweite Gehäuseteil 3 hindurch und aus diesem in die Umgebung des Doppeldichtventils herausgeführt ist. Durch diese Ausgestaltung ist das Schließglied 5 einerseits über die Stange 9 im ersten Gehäuseteil 2 und andererseits über die Führungsstange 9a im zweiten Gehäuseteil 3 zweifach gelagert.

In der in Fig. 1 dargestellten Offenstellung des Doppeldichtventils ist ein Durchtritt von Medium vom ersten zum zweiten Gehäuseteil 2 bzw. 3 oder umgekehrt möglich. Die Verbindungswege 11 und 12 sind über nicht dargestellte Absperrmittel zur Umgebung des Doppeldichtventils hin zu verschließen.

In der in Fig. 2 dargestellten Schließstellung des Doppeldichtventils ist der Mediumdurchtritt über die Verbindungsöffnung 1a durch das in der zylindrischen Sitzfläche 4 über die beiden Dichtungen 6 und 7 doppelt abdichtende Schließglied 5 verschlossen. Leckagen, die gegebenenfalls an den Abdichtungsstellen 6* oder 7* auftreten, gelangen in den Leckagehohlraum 8 und werden über die Verbindungswege 11 und/oder 12 in die Umgebung des Doppeldichtventils abgeführt. Hierzu müssen die vorstehend erwähnten und nicht dargestellten Absperrorgane diese Verbindungswege 11, 12 zur Umgebung des Doppeldichtventils hin offen halten.

Um das dargestellte Doppeldichtventil gegen Druckschläge aus dem ersten Gehäuseteil 2 zu sichern, wird die Stange 9 im Bereich ihrer Durchführung 1b durch das erste Gehäuseteil 2 mit einem Durchmesser ausgestattet, der gleich oder annähernd gleich dem Durchmesser der benachbarten zylindrischen Sitzfläche 4 ist. Ein derartiger sogenannter "Balancer" reduziert gleichzeitig auch die auf das Schließglied 5 zu übertragenden Schließkräfte als Folge des im Gehäuseteil 2 unter Druck anstehenden Mediums.

Wird die Führungsstange 9a im Bereich ihrer Durchführung 1c durch das zweite Gehäuseteil 3 mit einem Durchmesser ausgestattet, der gleich oder annähernd gleich dem Durchmesser der benachbarten zylindrischen Sitzfläche 4 ausgeführt ist, dann ist auch das Schließglied 5 gegen Druckschläge aus dem zweiten Gehäuseteil 3 gesichert. Auf eine derartige Maßnahme kann dann verzichtet werden, wenn eine Verschiebebewegung des Schließgliedes 5 in Richtung des Antriebes 10 durch einen dort planmäßig ohnehin vorgesehenen mechanischen Anschlag verhindert wird. In jedem Falle erleichtert ein derartiger "Balancer" das Öffnen des Doppeldichtventils in der in Fig. 1 dargestellten Richtung gegen Mediumsdrücke aus dem zweiten Gehäuseteil 3.

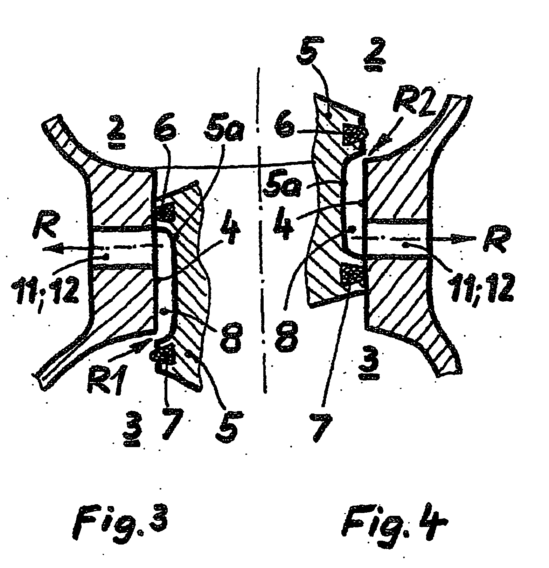

Ein Antrieb 10 verschiebt das Schließglied 5 des Doppeldichtventils um jeweils einen Teilhub in Richtung des ersten oder des zweiten Gehäuseteils 2 bzw. 3, wie dies in den Fig. 3 und 4 dargestellt ist, wodurch das vorgeschlagene Doppeldichtventil zwei erfindungsgemäße Spülstellungen erhält. In einer ersten Spülstellung (Fig. 3) wird ein Spülweg von dem zweiten Gehäuseteil 3 über den Leckagehohlraum 8 in den Verbindungsweg 11 oder die Verbindungswege 11 und 12 gebildet. Bei der Teilhubbewegung in der anderen Richtung ist eine zweite Spülstellung (Fig. 4) einstellbar, in der ein Spülweg von dem ersten Gehäuseteil 2 über den Leckagehohlraum 8 in den Verbindungsweg 11 oder die Verbindungswege 11 und 12 gebildet wird. In beiden Spülstellungen bleibt der Durchtritt über die Verbindungsöffnung 1a von dem einen zum anderen Gehäuseteil 2, 3 durch das Schließglied 5 geschlossen.

In den beiden vorgenannten Spülstellungen wird in der Regel Reinigungs- und/oder Desinfektionsmittel oder auch ein anderes Spülmittel R aus dem jeweils zum Leckagehohlraum 8 geöffneten Gehäuseteil 2 oder 3 herangeführt und über den Leckagehohlraum 8 und die Verbindungswege 11, 12 in die Umgebung des Doppeldichtventils abgeführt. Dabei werden nicht nur die freigelegten Dichtungen 6 oder 7, sondern auch der Leckagehohlraum 8 und die ihn berandenden Wandungen sowie die freigelegte Sitzfläche 4 und die Verbindungswege 11, 12 gereinigt.

Dank der durchmessergleichen Ausgestaltung der beiden zylindrischen Sitzflächen 4 kann der Öffnungshub des Schließgliedes 5 prinzipiell sowohl in Richtung des ersten Gehäuseteils 2 als auch in Richtung des zweiten Gehäuseteils 3 vorgesehen werden. Die Öffnungsrichtung, bezogen auf die gezeigte Darstellungslage des Doppeldichtventils 1, entweder nach oben oder nach unten, wird damit zu einer durch die Fähigkeit des vorgesehenen Antriebs 10 wahlweise zu bestimmenden Eigenschaft des vorgeschlagenen Doppeldichtventils 1. Die beiden Hubrichtungen sind beispielsweise dadurch sehr einfach zu realisieren, dass der Antrieb 10 auf Umschlag auf dem ersten Gehäuseteil 2 angeordnet wird.

Durch die Ausgestaltung und Anordnung des Leckagehohlraums 8 und seiner gehäuseseitigen Verbindungswege 11, 12 ist ein vertikaler oder horizontaler Einsatz des Doppeldichtventils 1 oder dessen Anordnung kopfüber ohne Einschränkung möglich.

Die im Sitzbereich 4 in radialer Richtung wirksamen Dichtungen 6 und 7 schaffen eine hohe Funktionssicherheit des Doppeldichtventils 1 insbesondere in axialer Richtung, da die Dichtwirkung dieser Dichtungen 6, 7 in einem weiten Toleranzbereich unabhängig von der axialen Positionierung zur berandenden zylindrischen Sitzfläche 4 ist.

## Patentansprüche

1. Doppeldichtventil mit Leckkontrolle, mit einem translatorisch verschiebbaren Schließglied (5), das eine ein erstes Gehäuseteil (2) mit einem zweiten Gehäuseteil (3) verbindende Verbindungsöffnung (1a) steuert, wobei das Schließglied (5), in seiner Verschieberichtung gesehen, umfangsseitig mit einer ventilgehäuseseitig korrespondierenden, die Verbindungsöffnung (1a) berandenden Sitzfläche (4) zwei axial beabstandete, durchmessergleiche Abdichtungsstellen (6*, 7*) bildet, welche Abdichtungsstellen (6*, 7*) derart angeordnet sind, dass bei Verschiebung des Schließglieds (5) in die eine Richtung in eine erste Spülstellung die dem einen Gehäuseteil (3) benachbarte erste Dichtung (7) von ihrer zugeordneten Dichtfläche (4) freikommt während die zweite Dichtung (6) die Verbindungsöffnung (1a) stets verschlossen hält, so dass ein erster Spülweg (R1) von dem einen Gehäuseteil (3) über einen, zwischen den Abdichtungsstellen ausgebildeten Leckagehohlraum (8) in wenigstens einen, Ventilgehäuseseitig vorgesehenen Verbindungsweg (11, 12) zur Umgebung des Doppeldichtventils gebildet wird, und bei Verschiebung des Schließglieds (5) in die andere Richtung in eine zweite Spülstellung, die dem anderen Gehäuseteil (2) benachbarte zweite Dichtung (6) von ihrer zugeordneten Dichtfläche (4) freikommt während die erste Dichtung (7) die Ventilöffnung (1a) stets verschlossen hält, so dass ein zweiter Spülweg (R2) von dem anderen Gehäuseteil (2) über den Leckagehohlraum (8) in den wenigstens einen Verbindungsweg (11, 12) gebildet wird, **dadurch gekennzeichnet, dass** nur ein einziges translatorisch verschiebbares Schließglied (5) im Ventilgehäuse vorgesehen ist, dass auf dem Schließglied (5) die zwei, in radialer Richtung wirksamen, Dichtungen (6, 7) angeordnet sind, dass der Leckagehohlraum (8) als Ausnehmung (5a) im Schließglied (5) ausgeführt ist, und dass die Verbindungsöffnung (1a) als zylindrische Sitzfläche (4) ausgebildet ist.

2. Doppeldichtventil nach Anspruch 1, **dadurch gekennzeichnet, dass** die Ausnehmung (5a) als umlaufender, in sich geschlossener Ringraum ausgebildet ist.

3. Doppeldichtventil nach Anspruch 1 oder 2, **dadurch gekennzeichnet, dass** der Leckagehohlraum (8) über einen zweiten Verbindungsweg (12) mit der Umgebung des Doppeldichtventils verbunden ist.

4. Doppeldichtventil nach wenigstens einem der Ansprüche 1 bis 3, **dadurch gekennzeichnet, dass** eine das Schließglied (5) mit einem Antrieb (10) verbindende Stange (9) im Bereich ihrer Durchführung (1b) durch das erste Gehäuseteil (2) mit einem Durchmesser ausgestattet ist, der gleich oder annähernd gleich dem Durchmesser der benachbarten zylindrischen Sitzfläche (4a; 4) ausgeführt ist.

5. Doppeldichtventil nach wenigstens einem der Ansprüche 1 bis 4, **dadurch gekennzeichnet, dass** eine das Schließglied (5) auf der dem Antrieb (10) gegenüberliegenden Seite im zweiten Gehäuseteil (3) führende Führungsstange (9a) im Bereich ihrer Durchführung (1c) durch das zweite Gehäuseteil (3) mit einem Durchmesser ausgestattet ist, der gleich oder annähernd gleich dem Durchmesser der benachbarten zylindrischen Sitzfläche (4) ausgeführt ist.

6. Doppeldichtventil nach einem der Ansprüche 4 bis 5, **dadurch gekennzeichnet, dass** ein als Faltenbalg oder Wellrohr ausgebildeter Balg vorgesehen ist, der die Durchführung der Stange (9) durch das erste Gehäuseteil (2) derart überbrückt, dass er die Stange (9) umschließt und einerseits unmittelbar an dem Schließglied (5) oder Stange (9) und andererseits unmittelbar oder mittelbar an dem ersten Gehäuseteil (2) befestigt ist.

7. Doppeldichtventil nach einem der Ansprüche 4 bis 6, **dadurch gekennzeichnet, dass** ein als Faltenbalg oder Wellrohr ausgebildeter Balg vorgesehen ist, der die Durchführung der Führungsstange (9a) durch das zweite Gehäuseteil (3) derart überbrückt, dass er die Führungsstange (9a) umschließt und einerseits unmittelbar an dem Schließglied (5) oder der Führungsstange (9a) und andererseits unmittelbar oder mittelbar an dem zweiten Gehäuseteil (3) befestigt ist.

8. Doppeldichtventil nach einem der Ansprüche 1 bis 7, **dadurch gekennzeichnet, dass** das erste Gehäuseteil (2) im Bereich der Durchführung der Stange (9) mit einem ersten Spülschloss ausgestattet ist.

9. Doppeldichtventil nach einem der Ansprüche 1 bis 8, **dadurch gekennzeichnet, dass** das zweite Gehäuseteil (3) im Bereich der Durchführung der Führungsstange (9a) mit einem zweiten Spülschloss ausgestattet ist.

## Claims

1. A double seal valve with leakage control, with a closure member (5) which is displaceable in translational movement and which controls a connecting aperture (1a) connecting a first housing part (2) to a second housing part (3), wherein the closure member (5), viewed in its displacement direction, forms peripherally with a spaced apart sealing face (4) corresponding to the connecting aperture (1a) on the valve-housing side two axially spaced sealing locations (6*,7*) of like diameter, which sealing locations (6*,7*) are arranged so that when the closure member (5) is displaced in one direction into a first flushing direction the first seal (7) adjacent the housing part (3) is released from its associated sealing face (4), whereas the second seal (C) keeps the connecting aperture (1a) always closed so that a first flushing path (R1) from the housing part (3) via a leakage opening (8) formed between the sealing locations is formed in at least one communicating path (11,12) provided on the valve-housing side so as to surround the double seal valve, and upon displacement of the closure member (5) in the other direction in a second flushing direction the second seal (6) adjacent the other housing part (2) is released from its associated sealing face (4), whereas the first seal (7) always keeps the valve aperture (1a) closed so that a second flushing path (R2) is formed by the other housing part (2) via the leakage opening (8) in the at least one communicating path (11,12), **characterised in that** only a single closure member (5) which is displaceable in translational movement is provided in the valve housing, **in that** the two seals (6,7) acting in radial direction are disposed on the closure member (5), **in that** the leakage opening (8) is in the form of a recess (5a) in the closure member (5), and **in that** the connecting aperture (1a) is formed as a cylindrical sealing face (4).

2. A double seal valve according to Claim 1, **characterised in that** the recess (5a) is in the form of a continuous self-contained annular chamber.

3. A double seal valve according to Claim 1 or 2, **characterised in that** the leakage opening (8) is connected to the environment via a second communicating path (12).

4. A double seal valve according to at least one of Claims 1 to 3, **characterised in that** a rod (9) connecting the closure member (5) to a drive means (10) has in the vicinity of its bushing (1b) through the first housing part (2) a diameter which is the same or approximately the same as the diameter of the adjacent cylindrical sealing face (4a;4).

5. A double seal valve according to at least one of Claims 1 to 4, **characterised in that** a guide rod (9a) guiding the closure member (5) on the side opposite the drive means (10) has in the vicinity of its bushing (1c) through the second housing part (3)a diameter which is the same or approximately the same as the diameter of the adjacent cylindrical sealing face (4).

6. A double seal valve according to any one of Claims 4 to 5, **characterised in that** a bellows is provided in the form of a corrugated bellows or corrugated pipe, which bridges the bushing for the rod (9) through the first housing part (2) in such a way that it surrounds the rod (9) and, on the one hand, is fastened directly to the closure member (5) or rod (9) and, on the other hand, is fastened directly or indirectly to the first housing part (2).

7. A double seal valve according to any one of Claims 4 to 6, **characterised in that** a bellows is provided in the form of a corrugated bellows or corrugated pipe, which bridges the bushing for the guide rod (9a) through the second housing part (3) in such a way that it surrounds the guide rod (9a) and, on the one hand, is fastened directly to the closure member (5) or the guide rod (9a) and, on the other hand, is fastened directly or indirectly to the second housing part (3).

8. A double seal valve according to any one of Claims 1 to 7, **characterised in that** the first housing part (2) is provided with a first scavenge lock in the vicinity of the bushing for the rod (9).

9. A double seal valve according to any one of Claims 1 to 8, **characterised in that** the second housing part (3) is provided with a second scavenge lock in the vicinity of the bushing for the guide rod (9a).

## Revendications

1. Soupape à siège double avec contrôle de fuite comportant un élément de fermeture (5) décalable en translation qui pilote une ouverture de liaison (1a) reliant une première partie de corps (2) avec une seconde partie de corps (3), l'élément de fermeture (5) formant, vu dans son sens de déplacement, sur le pourtour avec une surface de siège (4) correspondante du côté du corps de soupape, qui borde l'ouverture de liaison (1a), deux zones d'étanchéité (6*, 7*) de même diamètre, avec un écart axial, lesquelles zones d'étanchéité (6*, 7*) étant disposées de telle sorte que, lors du décalage de l'élément de fermeture (5) vers une direction dans une première position de rinçage la première étanchéité (7) voisine de l'une des partie du corps (3) se dégage de la surface d'étanchéité (4) qui lui est affectée tandis que la seconde étanchéité (6) maintient l'ouverture de liaison (1a) fermée en permanence, de manière à former une première voie de circulation de fluide (R1) par un espace creux de fuite (8) conformé entre les zones d'étanchéité, dans au moins une voie de liaison (11, 12) prévue du côté du corps de soupape vers le voisinage de la soupape à siège double et que lors d'un décalage de l'élément de fermeture (5) dans l'autre direction, dans une seconde position de rinçage, la seconde étanchéité (6) avoisinant l'autre partie du corps (2) se dégage de la surface d'étanchéité (4) qui lui est affectée tandis que la première étanchéité (7) maintient l'ouverture de la soupape (1a) toujours fermée, de manière à former une seconde voie de circulation de fluide (R2) par une autre partie de corps (2) par un espace creux (8) de fuite dans au moins une voie de liaison (11, 12), **caractérisé en ce qu'**un seul élément de fermeture (5) décalable en translation est prévu dans le corps de la soupape, **en ce que** les deux étanchéités (6, 7) efficaces radialement sont placées sur l'élément de fermeture (5), **en ce que** l'espace creux de fuite (8) est conformé en évidement (5a) dans l'élément de fermeture (5) et **en ce que** l'ouverture de liaison (1a) est conformée en tant que surface de siège (4) cylindrique.

2. Soupape à siège double selon la revendication 1, **caractérisée en ce que** l'évidement (5a) est conformé en espace circulaire sur tout le pourtour, fermé sur lui-même.

3. Soupape à siège double selon la revendication 1 ou 2 **caractérisée en ce que** l'espace creux de fuite (8) est relié par une seconde voie de liaison (12) avec le voisinage de la soupape à siège double.

4. Soupape à siège double selon au moins l'une des revendications 1 à 3 **caractérisée en ce qu'**une tige (9) reliant l'élément de fermeture (5) avec un actionneur (10) est pourvue au niveau de son passage (1b) à travers la première partie du corps (2) d'un diamètre identique ou quasiment identique au diamètre de la surface de siège (4a, 4) cylindrique voisine.

5. Soupape à siège double selon au moins une des revendications 1 à 4, **caractérisée en ce qu'**une tige de guidage (9a) guidant l'élément de fermeture (5) du côté opposé à l'actionneur (10) dans la seconde partie du corps (3) est pourvue au niveau de son passage (1c) à travers la seconde partie du corps (3) d'un diamètre identique ou quasiment similaire au diamètre de la surface de siège (4) cylindrique voisine.

6. Soupape à siège double selon l'une des revendications 4 à 5 **caractérisée en ce qu'**il est prévu un soufflet conformé en soufflet à plis ou tube annelé, qui ponte le passage de la tige (9) à travers la première partie du corps (2) de telle sorte qu'il entoure la tige (9) et qu'il est fixé d'une part directement à l'élément de fermeture (5) ou à la tige (9) et d'autre part directement ou indirectement à la première partie du corps (2).

7. Soupape à siège double selon l'une des revendications 4 à 6 **caractérisée en ce qu'**il est prévu un soufflet conformé en soufflet à plis ou tube annelé, qui ponte le passage de la tige (9a) à travers la seconde partie du corps (3) de telle sorte qu'il entoure la tige (9a) et qu'il est fixé d'une part directement à l'élément de fermeture (5) ou à la tige (9a) et d'autre part directement ou indirectement à la seconde partie du corps (3).

8. Soupape à siège double selon l'une des revendications 1 à 7 **caractérisée en ce que** la première partie du corps (2) est équipée au niveau du passage de la tige (9) d'un premier organe de verrouillage.

9. Soupape à siège double selon l'une des revendications 1 à 8 **caractérisée en ce que** la seconde partie du corps (3) est équipée au niveau du passage de la tige (9a) d'un second organe de verrouillage.
